# EUROPÄISCHE PATENTSCHRIFT

(11) **EP 2 064 025 B1**
(45) Veröffentlichungstag und Bekanntmachung des Hinweises auf die Patenterteilung: **11.09.2019**
(21) Anmeldenummer: 07817519.7
(22) Anmeldetag: 13.09.2007
(51) Int. Cl.: B23P 6/00, F01D 5/00, B23K 26/34, G05B 19/4097, B29C 67/00, B22F 3/105

(54) **REPARATURVERFAHREN**
METHOD OF REPAIR
PROCÉDÉ DE RÉPARATION

(30) Priorität: 21.09.2006 DE 102006044555
(43) Veröffentlichungstag der Anmeldung: 03.06.2009
(73) Patentinhaber: MTU Aero Engines AG, 80995 München (DE)
(72) Erfinder: LANGE, Anja, 30855 Langenhagen (DE)
(86) Internationale Anmeldenummer: PCT/DE2007/001647
(87) Internationale Veröffentlichungsnummer: WO 2008/034413

(56) Entgegenhaltungen:
- EP-A- 1 400 339
- EP-A1- 0 289 116
- WO-A2-2006/024844
- DE-A1- 4 327 189
- DE-A1- 10 319 494
- US-A1- 2001 014 403
- US-B1- 6 326 585
- GAO J ET AL: "INVESTIGATION OF A 3D NON-CONTACT MEASUREMENT BASED BLADE REPAIR INTEGRATION SYSTEM" AIRCRAFT ENGINEERING, BUNHILL PUBLICATIONS LTD. LONDON, GB, Bd. 77, Nr. 1, 2005, Seiten 34-41, XP001222981
- HAFERKAMP H ET AL: "RAPID MANUFACTURING DURCH LASERSINTERN UND 3D-LASERSTRAHL-AUFTRAGSCHW EISSEN RAPID MANUFACTURING BY LASER SINTERING AND LASER CLADDING" LASER UND OPTOELEKTRONIK, FACHVERLAG GMBH. STUTTGART, DE, Bd. 27, Nr. 3, Juni 1995 (1995-06), Seiten 64-69, XP000955177 ISSN: 0722-9003

## Beschreibung

Die Erfindung betrifft ein Reparaturverfahren für Laufschaufeln einer Gasturbine.

Die Laufschaufeln von Gasturbinen unterliegen während des Betriebs hohen mechanischen und thermischen Beanspruchungen, die zu Rissbildung führen können, sowie zusätzlichen Beanspruchungen durch Verschleiß. Durch die oben genannten Beanspruchungen der Laufschaufeln kann es erforderlich werden, dieselben nach Beschädigung dadurch zu reparieren, dass ein beschädigter Abschnitt der Laufschaufel, insbesondere eine Schaufelspitze derselben, von der Laufschaufel entfernt sowie nach dem Entfernen erneuert wird.

Aus der DE 103 19 494 A1 ist ein Verfahren zum Reparieren einer Leitschaufel einer Gasturbine bekannt, bei welchem ein beschädigter Abschnitt aus der zu reparierenden Leitschaufel herausgetrennt und ein Ersatzteil für den herausgetrennten Abschnitt mit Hilfe eines Rapid Manufacturing Prozesses hergestellt wird. Das durch den Rapid Manufacturing Prozess hergestellte Ersatzteil wird in die zu reparierende Leitschaufel durch Schweißen oder Löten integriert.

Ein weiteres Verfahren zur Reparatur von Gasturbinenschaufeln ist aus der DE 43 27 189 C2 bekannt, bei welchem von einem Schaufelblatt der zu reparierenden Gasturbinenschaufel ein beschädigter Abschnitt abgetrennt wird und bei welchem anschließend eine Reparaturplatte an den verbleibenden Schaufelblattstumpf der Gasturbinenschaufel angeschweißt wird. Anschließend erfolgt eine Bearbeitung der Reparaturplatte auf das gewünschte Schaufelblattprofil.

Den obigen aus dem Stand der Technik bekannten Reparaturverfahren ist allesamt gemeinsam, dass nach dem Abtrennen eines beschädigten Abschnitts von einer zu reparierenden Gasturbinenschaufel ein Ersatzteil hergestellt bzw. bereitgestellt wird, wobei das hergestellte bzw. bereitgestellte Ersatzteil mit der zu reparierenden Schaufel fest verbunden wird.

Aus der EP 0 289 116 A1 ist ein Verfahren zum Reparieren einer Laufschaufel einer Gasturbine mit den folgenden Schritten bekannt: a) Bereitstellen einer zu reparierenden Laufschaufel; b) Entfernen zumindest eines beschädigten Abschnitts einer beschädigten Schaufelspitze von der zu reparierenden Laufschaufel unter Ausbildung einer Trennfläche; c) sukzessives Aufbauen des oder jedes entfernten Abschnitts oder der gesamten Schaufelspitze auf der Trennfläche der Laufschaufel mit Hilfe eines Rapid Manufacturing Verfahrens unter Verwendung von dreidimensionalen CAD-Konstruktionsdaten der Laufschaufel, wobei als Rapid Manufacturing Verfahren ein zweistufiger Prozess, bei welchen in jedem ersten Schritt ein gleichmäßiges Pulverbett aus einem Metallpulver bereitgestellt wird, welches aus dem gleichen Legierungsgrundwerkstoff wie die zu reparierende Laufschaufel gebildet ist und in einem zweiten Schritt auf Basis der dreidimensionalen CAD-Konstruktionsdaten Metallpulver des Pulverbetts selektiv aufgeschweißt wird, wiederholend ausgeführt wird.

Aus der Offenlegungsschrift WO 2006/024844 A2 ist ein Verfahren zum Anpassen eines Werkstücks an geometrische Konstruktionsdaten unter Verwendung einer Koordinatenpositioniervorrichtung bekannt. Bei dem beschriebenen Verfahren wird ein zu fertigendes Werkstück zwischen zwei Fertigungsschritten vermessen und die dabei erhaltene Ist-Kontur mit der Soll-Kontur verglichen. Ein "fitting algorithm" berechnet einen Abgleich des Werkstücks mit den Achsen der Fertigungsmaschine oder ein Anpassen der Steuerbefehle für nachfolgende Bearbeitungsschritte.

Hiervon ausgehend liegt der vorliegenden Erfindung das Problem zu Grunde ein neuartiges Reparaturverfahren für Laufschaufeln einer Gasturbine zu schaffen.

Dieses Problem wird durch ein Reparaturverfahren gemäß Anspruch 1 gelöst. Erfindungsgemäß umfasst das Reparaturverfahren für Laufschaufeln einer Gasturbine zumindest die folgenden Schritte in der Reihenfolge der Aufzählung:
a) Bereitstellen einer zu reparierenden Laufschaufel;
b) Entfernen zumindest eines beschädigten Abschnitts einer beschädigten Schaufelspitze von der zu reparierenden Laufschaufel unter Ausbildung einer Trennfläche, welche nach dem Entfernen des oder jedes beschädigten Abschnitts oder der beschädigten Schaufelspitze von der Laufschaufel vermessen wird, wobei dann, wenn eine hierbei ermittelte Ist-Kontur der Trennfläche um mehr als ein definiertes Maß von einer durch die CAD-Konstruktionsdaten der Laufschaufel bestimmten Soll-Kontur der Trennfläche abweicht, die CAD-Konstruktionsdaten an die Ist-Kontur angepasst werden, wobei ein Übergangsprofil zwischen der Ist-Kontur und der Soll-Kontur ermittelt wird;
c) sukzessives Aufbauen des oder jedes entfernten Abschnitts der Schaufelspitze auf der Trennfläche der Laufschaufel mit Hilfe eines Rapid Manufacturing Verfahrens unter Verwendung von dreidimensionalen CAD-Konstruktionsdaten der Laufschaufel, wobei als Rapid Manufacturing Verfahren ein zweistufiger Prozess, bei welchem in jedem ersten Schritt ein gleichmäßiges Pulverbett aus einem Metallpulver bereitgestellt wird, welches aus dem gleichen Legierungsgrundwerkstoff wie die zu reparierende Laufschaufel gebildet ist und in einem zweiten Schritt auf Basis der angepassten dreidimensionalen CAD-Konstruktionsdaten Metallpulver des Pulverbetts selektiv aufgeschweißt wird, wiederholend ausgeführt wird.

Die hier vorliegende Erfindung stellt ein Reparaturverfahren für Laufschaufeln einer Gasturbine bereit, mit Hilfe dessen eine Reparatur mit hoher Qualität möglich ist. Das erfindungsgemäße Reparaturverfahren ist für eine Vielzahl von Schadensfällen an Laufschaufeln geeignet. Das erfindungsgemäße Reparaturverfahren kommt ohne teueren Modell- und Formenbau aus und erlaubt demnach eine relativ kostengünstige Reparatur von Laufschaufeln, auch an integral beschaufelten Rotoren wie so genannten Blisks und Blings.

Nach dem Entfernen des oder jedes beschädigten Abschnitts der Schaufelspitze von der Laufschaufel wird die Trennfläche vermessen, wobei dann, wenn eine hierbei ermittelte Ist-Kontur der Trennfläche um mehr als ein definiertes Maß von einer durch die CAD-Konstruktionsdaten der Laufschaufel bestimmten Soll-Kontur der Trennfläche abweicht, die CAD-Konstruktionsdaten an die Ist-Kontur angepasst werden, wobei ein Übergangsprofil zwischen der Ist-Kontur und der Soll-Kontur ermittelt wird.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, nachfolgend näher erläutert.

Die hier vorliegende Erfindung betrifft ein Verfahren zur Reparatur von Laufschaufeln einer Gasturbine. Gasturbinenlaufschaufeln können während des Betriebs z.B. durch Oxidation, Korrosion oder Erosion im Bereich einer Schaufelspitze derart stark beschädigt werden, dass die beschädigte Schaufelspitze ganz oder teilweise ersetzt werden muss.

Zur Reparatur einer im Bereich ihrer Schaufelspitze beschädigten Laufschaufel wird zuerst die beschädigte, zu reparierende Laufschaufel bereitgestellt und anschließend von der zu reparierenden Laufschaufel die beschädigte Schaufelspitze oder zumindest ein beschädigter Abschnitt derselben unter Ausbildung einer Trennfläche entfernt. Dabei sind auch Abschnitte gemeint, die von der Schaufelspitze zur Ein- oder Austrittskante der Schaufel verlaufen.

Die Lage der Trennfläche bzw. Trennlinie zum Abtrennen des Abschnitts bzw. der beschädigten Schaufelspitze vom Schaufelblatt der Laufschaufel wird einerseits von Festigkeitsanforderungen abhängig gemacht, andererseits muss im Bereich der Trennfläche die Laufschaufel frei von Beschichtungen und radialen Rissen sein.

Im Sinne der hier vorliegenden Erfindung wird nun vorgeschlagen, auf die sich nach dem Entfernen des Abschnitts bzw. der beschädigten Schaufelspitze ausbildende Trennfläche sukzessive durch ein Rapid Manufacturing Verfahren einen neuen Abschnitt bzw. eine neue Schaufelspitze aufzubauen, wobei hierzu auf dreidimensionale CAD-Konstruktionsdaten der Laufschaufel zugegriffen wird. Auf Basis der dreidimensionalen CAD-Konstruktionsdaten der Laufschaufel wird demnach im Sinne der hier vorliegenden Erfindung auf der Trennfläche sukzessive ein neuer Abschnitt bzw. eine neue Schaufelspitze aufgebaut. Dies erfolgt, wie bereits erwähnt, durch ein Rapid Manufacturing Verfahren.

Bei dem Rapid Manufacturing Verfahren wird ein zweistufiger Prozess wiederholend ausgeführt. In einem ersten Schritt des zweistufigen Prozesses wird ein gleichmäßiges Pulverbett aus einem Metallpulver bereitgestellt, wobei in einem zweiten Schritt auf Basis der dreidimensionalen CAD-Konstruktionsdaten das Metallpulver des Pulverbetts selektiv aufgeschweißt wird. Durch wiederholende Ausführung dieses zweistufigen Prozesses wird auf der Trennfläche die neue Schaufelspitze sukzessive aufgebaut.

In dem ersten Schritt des obigen zweistufigen Prozesses wird ein Metallpulver bereitgestellt, dessen chemische Zusammensetzung idealerweise der chemischen Zusammensetzung der zu reparierenden Laufschaufel entspricht. Zumindest jedoch wird ein Metallpulver bereitgestellt, welches aus dem gleichen Legierungsgrundwerkstoff wie die zu reparierende Laufschaufel gebildet ist. Ist die zu reparierende Laufschaufel z.B. aus einer Nickelbasislegierung hergestellt, so wird ein Metallpulver aus einer Nickelbasislegierung zur Bereitstellung des gleichmäßigen Pulverbetts verwendet. Bei jeder wiederholenden Ausführung des ersten Schritts des zweistufigen Prozesses des Rapid Manufacturing Verfahrens wird ein Pulverbett mit einer Dicke von maximal 200 µm bereitgestellt, wobei die mittlere Körnung des Metallpulvers vorzugsweise zwischen 10 µm und 150 µm beträgt. Das gleichmäßige Aufbringen des Pulverbetts kann z.B. mit Hilfe eines Abstreifers erfolgen.

In jedem zweiten Schritt des zweistufigen Prozesses des Rapid Manufacturing Verfahrens wird mit Hilfe von Laserstrahlschweißen oder mit Hilfe von Elektronenstrahlschweißen Metallpulver selektiv auf die Trennfläche aufgeschweißt.

Im Zusammenhang mit dem Rapid Manufacturing Verfahren sei darauf hingewiesen, dass die von dem beschädigten Abschnitt bzw. der beschädigten Schaufelspitze befreite Laufschaufel zur Ausführung des Rapid Manufacturing Verfahrens in einer Prozesskammer einer Rapid Manufacturing Anlage positioniert wird. Sollen mehrere Laufschaufeln gleichzeitig in einer Rapid Manufacturing Anlage mit Hilfe des erfindungsgemäßen Verfahrens repariert werden, so müssen die Trennflächen der verschiedenen Laufschaufeln exakt in einer Ebene ausgerichtet werden.

Bei Ausführung des Rapid Manufacturing Verfahrens wird der Prozessraum der Rapid Manufacturing Anlage vorzugsweise bis zur Trennfläche der zu reparierenden Laufschaufel mit dem Metallpulver befüllt. Alternativ ist es auch möglich, in die Rapid Manufacturing Anlage einen Zwischenboden einzufügen, und lediglich den Abschnitt oberhalb des Zwischenbodens mit Metallpulver zu befüllen. Hierdurch kann Metallpulver eingespart werden.

Zur Ausführung des Rapid Manufacturing Verfahrens wird der Prozessraum der Rapid Manufacturing Anlage entweder evakuiert oder mit einem inerten Schutzgas gefüllt, so dass während des Aufschweißens des Pulvers auf der Trennfläche der zu reparierenden Laufschaufel ein Oxidieren verhindert wird.

Gegebenenfalls werden die Laufschaufeln zum Aufschweißen des Metallpulvers vorgewärmt.

Beim sukzessiven Aufbauen des neuen Abschnitts bzw. der neuen Schaufelspitze auf der Trennfläche der zu reparierenden Laufschaufel kann die neue Schaufelspitze mit einem Übermaß zur äußeren Kontur der zu reparierenden Laufschaufel aufgebaut werden. In diesem Fall ist eine Nachbearbeitung der neuen Schaufelspitze zwingend erforderlich.

Nach einer vorteilhaften Weiterbildung des erfindungsgemäßen Reparaturverfahrens wird nach dem Entfernen des beschädigten Abschnitts bzw. der beschädigten Schaufelspitze von der Laufschaufel die sich ausbildende Trennfläche vermessen und hierbei eine Ist-Kontur der Trennfläche ermittelt.

Unter Kenntnis der Trennlinie sowie der dreidimensionalen CAD-Konstruktionsdaten der Laufschaufel kann aus den CAD-Konstruktionsdaten eine Soll-Kontur für die Trennfläche abgeleitet werden. Dann, wenn die gemessene Ist-Kontur von der errechneten Soll-Kontur um mehr als ein definiertes Maß abweicht, ist erfindungsgemäß vorgesehen, die CAD-Konstruktionsdaten an die Ist-Kontur derart anzupassen, dass ein Übergangsprofil zwischen der Ist-Kontur und der Soll-Kontur der Trennfläche ermittelt wird. Hierdurch ist es möglich, Geometrieunterschiede zwischen der Ist-Kontur und der Soll-Kontur der Trennfläche, die z.B. durch einen Verschleiß oder durch Produktionstoleranzen verursacht sein können, auszugleichen.

Es sei darauf hingewiesen, dass die Schweißparameter zum Aufschweißen des Metallpulvers beim Rapid Manufacturing Verfahren auf die zu reparierende Laufschaufel sowie auf den Werkstoff derselben sowie des Metallpulvers abzustimmen sind. Durch geeignete Wahl der Schweißparameter kann sowohl ein polykristallines als auch ein einkristallines sowie ein gerichtet er-starrtes Aufbauen einer neuen Schaufelspitze auf der Trennfläche der Laufschaufel erfolgen.

Eine mit dem erfindungsgemäßen Reparaturverfahren reparierte Laufschaufel kann gegebenenfalls anschließend beschichtet werden, so z.B. im Bereich einer Saugseite sowie Druckseite des Schaufelblatts der Laufschaufel.

## Patentansprüche

1. Reparaturverfahren für Laufschaufeln einer Gasturbine, mit zumindest den folgenden Schritten in der Reihenfolge der Aufzählung:
a) Bereitstellen einer zu reparierenden Laufschaufel;
b) Entfernen zumindest eines beschädigten Abschnitts einer beschädigten Schaufelspitze von der zu reparierenden Laufschaufel unter Ausbildung einer Trennfläche, welche nach dem Entfernen des oder jedes beschädigten Abschnitts oder der beschädigten Schaufelspitze von der Laufschaufel vermessen wird, wobei dann, wenn eine hierbei ermittelte Ist-Kontur der Trennfläche um mehr als ein definiertes Maß von einer durch die CAD-Konstruktionsdaten der Laufschaufel bestimmten Soll-Kontur der Trennfläche abweicht, die CAD-Konstruktionsdaten an die Ist-Kontur angepasst werden, wobei ein Übergangsprofil zwischen der Ist-Kontur und der Soll-Kontur ermittelt wird;
c) sukzessives Aufbauen des oder jedes entfernten Abschnitts oder der gesamten Schaufelspitze auf der Trennfläche der Laufschaufel mit Hilfe eines Rapid Manufacturing Verfahrens unter Verwendung von dreidimensionalen CAD-Konstruktionsdaten der Laufschaufel, wobei als Rapid Manufacturing Verfahren ein zweistufiger Prozess, bei welchen in jedem ersten Schritt ein gleichmäßiges Pulverbett aus einem Metallpulver bereitgestellt wird, welches aus dem gleichen Legierungsgrundwerkstoff wie die zu reparierende Laufschaufel gebildet ist und in einem zweiten Schritt auf Basis der angepassten dreidimensionalen CAD-Konstruktionsdaten Metallpulver des Pulverbetts selektiv aufgeschweißt wird, wiederholend ausgeführt wird.

2. Reparaturverfahren nach Anspruch 1,
**dadurch gekennzeichnet,**
**dass** in jedem ersten Schritt ein gleichmäßiges Pulverbett mit einer Dicke von maximal 200 µm bereitgestellt wird.

3. Reparaturverfahren nach Anspruch 1 oder 2,
**dadurch gekennzeichnet,**
**dass** in jedem ersten Schritt ein Pulverbett mit einer Körnung zwischen 10 µm und 150 µm bereitgestellt wird.

4. Reparaturverfahren nach einem oder mehreren der Ansprüche 1 bis 3,
**dadurch gekennzeichnet,**
**dass** in jedem zweiten Schritt das selektive Aufschweißen des Metallpulver über Laserstrahlscheißen erfolgt.

5. Reparaturverfahren nach einem oder mehreren der Ansprüche 1 bis 4,
**dadurch gekennzeichnet,**
**dass** in jedem zweiten Schritt das selektive Aufschweißen des Metallpulver über Elektronenstrahlschweißen erfolgt.

6. Reparaturverfahren nach einem oder mehreren der Ansprüche 1 bis 5,
**dadurch gekennzeichnet,**
**dass** der oder jeder abgetrennte Abschnitt oder die gesamte Schaufelspitze auf der Trennfläche der Laufschaufel mit Übermaß aufgebaut wird, wobei nachfolgend eine Nachbearbeitung der reparierten Schaufelspitze erfolgt.

## Claims

1. Method for repairing rotor blades of a gas turbine, comprising at least the following steps in the stated order:
a) providing a rotor blade to be repaired;
b) removing at least one damaged portion of a damaged blade tip from the rotor blade to be repaired, forming a separation surface which is measured after the or each damaged portion or the damaged blade tip is removed from the rotor blade, wherein, when an actual contour of the separation surface identified thereby deviates by more than a defined amount from a desired contour of the separation surface determined by the CAD design data of the rotor blade, the CAD design data is adapted to the actual contour, wherein a transitional profile between the actual contour and the desired contour is identified;
c) successively building up the or each removed portion or the entire blade tip on the separation surface of the rotor blade by means of a rapid manufacturing method using three-dimensional CAD design data of the rotor blade, wherein, as a rapid manufacturing method, a two-step process is carried out repeatedly, in which in each first step a uniform powder bed made of a metal powder is formed, which metal powder is formed of the same alloy base material as the rotor blade to be repaired, and in a second step metal powder of the powder bed is selectively welded on on the basis of the adapted three-dimensional CAD design data.

2. Repair method according to claim 1, **characterized in that** in each first step a uniform powder bed which has a thickness of at most 200 µm is provided.

3. Repair method according to either claim 1 or claim 2, **characterized in that** in each first step a powder bed which has a grain size of between 10 µm and 150 µm is provided.

4. Repair method according to one or more of claims 1 to 3, **characterized in that** in each second step the metal powder is selectively welded on by means of laser beam welding.

5. Repair method according to one or more of claims 1 to 4, **characterized in that** in each second step the metal powder is selectively welded on by means of electron beam welding.

6. Repair method according to one or more of claims 1 to 5, **characterized in that** the or each separated portion or the entire blade tip is built up on the separation surface of the rotor blade so as to be oversized, the repaired blade tip subsequently being finished.

## Revendications

1. Procédé de réparation d'aubes de rotor d'une turbine à gaz, comprenant au moins les étapes suivantes dans l'ordre d'énumération :
a) fourniture d'une aube de rotor à réparer ;
b) extraction d'au moins une section endommagée d'une extrémité d'aube endommagé de l'aube de rotor à réparer, en formant une surface de séparation mesurée après l'extraction de la section ou de chaque section endommagée ou de l'extrémité d'aube endommagée de l'aube de rotor, les données CAO étant adaptées au contour réel si un contour réel de la surface de séparation ainsi déterminée dévie de plus qu'une mesure définie par rapport à un contour de consigne de la surface de séparation déterminé par les données CAO de l'aube de rotor, un profilé de transition étant déterminé entre le contour réel et le contour de consigne ;
c) mise en place successive de la section ou de chaque section extraite ou de l'extrémité d'aube entière sur la surface de séparation de l'aube de rotor à l'aide d'un procédé de fabrication rapide utilisant des données CAO tridimensionnelles de l'aube de rotor, le procédé de fabrication rapide étant exécuté de manière répétitive comme un procédé en deux étapes selon lequel, dans chaque première étape, un lit de poudre uniforme constitué d'une poudre métallique est prévu, lequel lit de poudre est formé à partir du même matériau de base en alliage que l'aube de rotor à réparer et, dans une seconde étape, la poudre métallique du lit de poudre étant soudée de manière sélective sur la base des données CAO tridimensionnelles adaptées.

2. Procédé de réparation selon la revendication 1, **caractérisé en ce que**, dans chaque première étape, un lit de poudre uniforme d'une épaisseur maximale de 200 µm est prévu.

3. Procédé de réparation selon la revendication 1 ou 2, **caractérisé en ce que**, dans chaque première étape, un lit de poudre d'une granulométrie comprise entre 10 et 150 µm est prévu.

4. Procédé de réparation selon au moins l'une des revendications 1 à 3, **caractérisé en ce que**, dans une étape sur deux, la poudre métallique est soudée de manière sélective par soudage par faisceau laser.

5. Procédé de réparation selon au moins l'une des revendications 1 à 4, **caractérisé en ce que**, dans une étape sur deux, la poudre métallique est soudée de manière sélective par soudage par faisceau d'électrons.

6. Procédé de réparation selon au moins l'une des revendications 1 à 5, **caractérisé en ce que** la section ou chaque section séparée ou l'extrémité d'aube entière est surdimensionnée sur la surface de séparation de l'aube de rotor, l'extrémité d'aube réparée étant ensuite retravaillée.
